# EUROPEAN PATENT APPLICATION

(11) **EP 4 530 312 A1**
(43) Date of publication of application: **02.04.2025**
(21) Application number: 23811351.8
(22) Date of filing: 20.01.2023
(51) Int. Cl.: C08K 5/09, C08L 1/10, C08L 67/00, C08K 3/105, C05G 3/40

(54) **COMPOSITION FOR AGRICULTURAL USE**

(30) Priority: 23.05.2022 JP 2022083541
(71) Applicant: Daicel Corporation, Osaka-shi, Osaka 530-0011 (JP)
(72) Inventor: MATSUO, Yukiko, Tokyo 108-8230 (JP); HIRAMATSU, Kazushi, Tokyo 108-8230 (JP); NAKATANI, Tetsu, Tokyo 108-8230 (JP)
(74) Representative: Hoffmann Eitle
(86) International application number: PCT/JP2023/001707
(87) International publication number: WO 2023/228470

(57) **Abstract**

The agricultural composition is a granular material containing acetic acid, a biodegradable polymer miscible with acetic acid, and an inorganic additive. The agricultural composition may have a coating film that coats the granular material.

## Description

### Technical Field

The present disclosure relates to an agricultural material. More specifically, the present disclosure relates to a granular composition for use in agriculture or horticulture.

### Background Art

Liquid pyroligneous acid has been known as a functional additive for plants. In addition, in recent years, biostimulants (also referred to as biostimulating agents) that use a mechanism in which a gene of a plant for resistance to environmental stress is activated by the action of acetic acid have attracted attention as agricultural materials. Biostimulants are said to exert a favorable effect on plant health, resistance to stress, and the like by using the natural power inherent in plants and their surrounding environment.

For example, Patent Document 1 (WO 2020/130145) discloses an agent for improving the heat resistance or salt tolerance of a plant, the agent containing acetic acid or a salt thereof, or a solvate thereof. Patent Document 1 also proposes use of the agent as a liquid composition such as an aqueous acetic acid solution. When an aqueous acetic acid solution is sprayed on a plant, on the soil in which the plant grows, or the like, a problem of runoff of water-soluble acetic acid through rain or the like occurs. Another problem is that since acetic acid alone is strongly irritating to plants, the aqueous acetic acid solution cannot be used in a high concentration. Therefore, in order to achieve a desired effect using the liquid composition disclosed in Patent Document 1, the liquid composition must be sprayed a plurality of times.

Meanwhile, Patent Document 2 (JP H08-59421 A) discloses a solidified material of pyroligneous acid, the solidified material containing pyroligneous acid, a natural gelling agent, a polyhydric alcohol, an organic acid or a salt thereof, an organic fertilizer, and water. Patent Document 3 (JP 2008-189647 A) discloses a soil conditioner produced by impregnating crushed chaff with pyroligneous acid and unhulled rice vinegar.

Patent Document 4 (JP 2005-515234 T) discloses a sustained-release preparation made of an adsorption carrier containing a biologically active substance and a sustained-release membrane. The sustained-release membrane is a mixture of a polysaccharide, an inorganic alkali, and an organic or inorganic acid as a release modifier. Patent Document 5 (JP H11-116371 A) discloses a granular agricultural and horticultural composition in which the surface of a granular fertilizer is coated with a coating film material A, which is a biodegradable cellulose ester composition, or with a mixture of the coating film material A and a coating film material B such as an olefin polymer.

### Citation List

### Patent Document

Patent Document 1: WO 2020/130145
Patent Document 2: JP H08-59421 A
Patent Document 3: JP 2008-189647 A
Patent Document 4: JP 2005-515234 T
Patent Document 5: JP H11-116371 A

### Summary of Invention

### Technical Problem

In order to solidify the liquid components, a chemical such as a gelling agent or a binder is required. However, in consideration of use of these biostimulants as agricultural materials, there is a concern that the various chemicals may remain in the soil or the like. Moreover, a technique for solidifying acetic acid that is effective as a biostimulant using a material having a low environmental impact and efficiently spraying the solidified acetic acid onto soil or the like has not yet been proposed.

Thus, an object of the present disclosure is to provide an agricultural composition that can stably support acetic acid and has a low environmental impact.

### Solution to Problem

An agricultural composition according to the present disclosure is a granular material containing acetic acid, a biodegradable polymer miscible with acetic acid, and an inorganic additive.

### Advantageous Effects of Invention

An agricultural composition according to the present disclosure can stably retain liquid acetic acid by using, as a carrier, a polymer that is miscible with acetic acid. Further, since the agricultural composition is in the form of solid grains, it can be efficiently sprayed onto soil or the like.

### Brief Description of Drawings

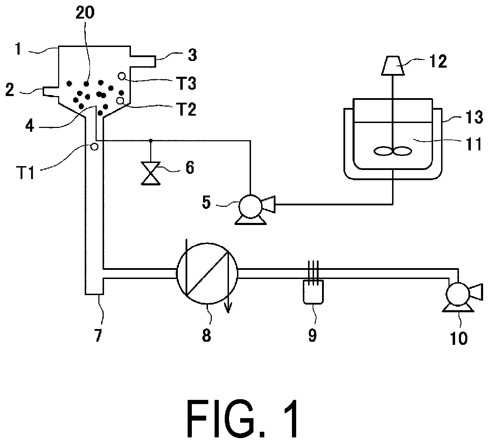

FIG. 1 is a conceptual diagram for explaining a device for producing an agricultural composition according to one embodiment.

### Description of Embodiments

Preferred embodiments are described in detail below with reference to the drawing as appropriate. Each of the configurations in each of the embodiments and combinations thereof are merely examples, and various additions, omissions, substitutions, and other changes of the configurations may be made, as appropriate, without departing from the spirit of the present disclosure. The present disclosure is not limited by the embodiments and is limited only by the claims. Each aspect disclosed in the present specification can be combined with any other feature disclosed herein.

In the present specification, "X to Y" indicating a range means "X or greater and Y or less", "ppm" means "ppm by weight", and unless otherwise noted, all test temperatures are room temperature (20°C ± 5°C).

### First Embodiment

An agricultural composition according to a first embodiment is a granular material containing acetic acid, a biodegradable polymer miscible with acetic acid, and an inorganic additive. As used herein, "granular material" means a material having a solid granular form at room temperature (20°C ± 5°C). In the present disclosure, the granular material is not limited to spherical grains, and may be substantially spherical, may be flat, may have a smooth surface, may have irregularities on the surface, or may be a mixture thereof. In addition, the granular material according to an embodiment of the present disclosure may be uniform grains, a granulated product, or a mixture thereof. The term "granulated product" means a product produced by granulating a powdery raw material by binding, aggregation, or the like.

In the agricultural composition according to an embodiment of the present disclosure, acetic acid can be stably held by the inorganic additive and the biodegradable polymer miscible with acetic acid. The agricultural composition according to an embodiment of the present disclosure is applied as a solid to soil or the like. In this agricultural composition, acetic acid is substantially uniformly dispersed and held in the granular material made of the biodegradable polymer and the inorganic additive. Therefore, direct irritation of acetic acid on plants growing in soil or the like is reduced. This agricultural composition allows acetic acid to be applied at a higher concentration than those in the related art at a necessary point of time, and therefore need not be applied for a plurality of times unlike those in the related art.

By applying the agricultural composition according to an embodiment of the present disclosure to a growth environment of a plant, the released acetic acid activates a gene of the plant for resistance to stress, and the resistance of the plant to non-biological stress such as drought and heat is improved. A plant of excellent quality can thereby be produced at a high yield even in a dry environment or a hot environment. Furthermore, since the agricultural composition contains the biodegradable polymer as a material, an effect of a smaller environmental impact compared to other synthetic polymers is achieved.

### Average Grain Size

In the present disclosure, the grain size of the agricultural composition is not particularly limited and can be adjusted to a desired grain size according to the application. From the viewpoints of storage stability and handling ease, the average grain size (median diameter) of the agricultural composition may be 1 mm or greater, 1.2 mm or greater, or 1.5 mm or greater, and may be 5.0 mm or less, or 4.5 mm or less.

### Biodegradable Polymer

The biodegradable polymer is miscible with acetic acid. In the present specification, a biodegradable polymer having a solubility in acetic acid at 50°C of from 1 wt.% to 95 wt.% is said to be "miscible with acetic acid". The biodegradable polymer miscible with acetic acid absorbs a large amount of acetic acid. Since the biodegradable polymer is miscible with acetic acid, an agricultural composition in which acetic acid is uniformly dispersed can be produced. In the present specification, solubility is defined as a limit concentration at which the biodegradable polymer is dissolved in a certain amount of acetic acid, that is, the concentration (wt.%) in a saturated solution.

From the viewpoint of uniformly containing acetic acid, the solubility of the biodegradable polymer in acetic acid at 50°C may be 2 wt.% or greater, or 3 wt.% or greater. From the viewpoint of maintaining a desired shape, the solubility of the biodegradable polymer in acetic acid at 50°C may be 90 wt.% or less, or 85 wt.% or less. Moreover, the solubility of the biodegradable polymer in acetic acid at 50°C may be from 1 to 95 wt.%, from 1 to 90 wt.%, from 1 to 80 wt.%, from 2 to 95 wt.%, from 2 to 90 wt.%, from 2 to 80 wt.%, from 3 to 95 wt.%, from 3 to 90 wt.%, or from 3 to 80 wt.%.

The type of biodegradable polymer is not particularly limited as long as the biodegradable polymer has the above-described miscibility with acetic acid. From the viewpoint of a low environmental impact, preferred biodegradable polymers include cellulose esters, aliphatic polyesters, or mixtures thereof.

### Cellulose Ester

The cellulose ester has an acyl group as a substituent. Examples of the acyl group include an acetyl group, a propionyl group, a butyryl group, a carboxyl group, a carboxymethyl group, a 2-hydroxyethyl group, a 2-hydroxypropyl group, and a methyl group. The cellulose ester may have two or more types of acyl groups. From the viewpoint of achieving a high level of biodegradability, the substituent of the cellulose ester is preferably an acetyl group, a propionyl group, or a butyryl group, and from the viewpoint of high miscibility with acetic acid, the substituent thereof is more preferably an acetyl group. The cellulose ester may contain a substituent other than the acyl group as long as the effects of the present disclosure are not impaired.

Specific examples of the cellulose ester used in the agricultural composition according to an embodiment of the present disclosure include cellulose acetate, cellulose propionate, cellulose butyrate, cellulose acetate propionate, and cellulose acetate butyrate. **In** the present disclosure, the cellulose ester may be one or two or more types selected from the group consisting of cellulose acetate, cellulose acetate propionate, and cellulose acetate butyrate. From the viewpoint of excellent biodegradability, the cellulose ester is more preferably cellulose acetate.

### Degree of Substitution

In the agricultural composition according to an embodiment of the present disclosure, the average degree of substitution DS of the cellulose ester is not particularly limited. The desired average degree of substitution can be selected according to the application. Note that in the present specification, the term "degree of substitution" with regard to cellulose ester means an average degree of substitution.

For example, from the viewpoint of achieving good biodegradability, the average degree of substitution of the cellulose ester is preferably 2.60 or less, more preferably 2.55 or less, and still more preferably 2.50 or less. From the viewpoint of the ease of granular formation, the average degree of substitution of the cellulose ester is preferably 2.00 or greater, more preferably 2.05 or greater, and particularly preferably 2.10 or greater. The average degree of substitution of the cellulose ester may be from 2.00 to 2.60, from 2.00 to 2.55, from 2.00 to 2.50, from 2.05 to 2.60, from 2.05 to 2.55, from 2.05 to 2.50, from 2.10 to 2.60, from 2.10 to 2.55, or from 2.10 to 2.50. When the degree of substitution is less than 2.10, the shape of the granular material tends to be non-uniform.

The degree of substitution of the cellulose ester can be measured by the following method. For example, the degree of substitution of the cellulose ester can be measured by NMR according to the method of Tezuka (Tezuka, Carbonydr. Res. 273, 83 (1995)). That is, the free hydroxyl group of the cellulose ester is acylated with a carboxylic anhydride in pyridine. The type of the carboxylic anhydride used here should be selected according to the purpose of analysis. For example, when a degree of acetyl substitution of cellulose acetate is analyzed, butyric anhydride is suitable, and, when a degree of butyryl substitution of cellulose butyrate is analyzed, acetic anhydride is suitable. The resulting sample is dissolved in deuterated chloroform, and the ¹³C-NMR spectrum is measured. For example, when the substituent is an acetyl group, carbon signals of the acetyl group appear in the order of the 2-position, the 3-position, and the 6-position from a higher magnetic field in a region of from 169 ppm to 171 ppm. In another example, when a cellulose ester having a propionyl group or a cellulose ester having no propionyl group is treated with propionic anhydride for the purpose of analyzing a degree of propionyl substitution, carbonyl carbon signals of the propionyl group appear in the same order in a region of from 172 ppm to 174 ppm. The total degree of substitution of the cellulose ester treated with the carboxylic anhydride by the method of Tezuka or a similar method is 3.0, and thus, if a sum of areas of the carbonyl carbon signals of the acyl group originally included in the cellulose ester and the carbonyl signals of the acyl group introduced by the treatment with carboxylic anhydride is normalized to 3.0, and a presence ratio of each acyl group at each corresponding position (in other words, area ratio of each signal) is determined, each of degrees of acyl substitution at the 2-, 3-, and 6-positions of a glucose ring in the cellulose ester can be determined. It goes without saying, a substituent containing an acyl group that can be analyzed by this method is only a substituent group that does not correspond to the carboxylic anhydride used in the treatment for an analytical purpose. **In** addition, the degree of substitution can be analyzed by ¹H-NMR in addition to ¹³C-NMR.

### Weight Average Molecular Weight and Molecular Weight Distribution of Cellulose Ester

The weight average molecular weight and the molecular weight distribution of the cellulose ester are not particularly limited, and a desired molecular weight and a desired molecular weight distribution can be selected according to the application. For example, from the viewpoint of excelling in granular formability, the weight average molecular weight Mw of the cellulose ester is preferably 100000 or greater, and more preferably 120000 or greater. From the viewpoint of achieving high biodegradability, the weight average molecular weight Mw of the cellulose ester is preferably 1500000 or less and more preferably 1200000 or less. From the viewpoint of achieving excellent biodegradability, the weight average molecular weight Mw is preferably 1000000 or less, more preferably 800000 or less, and still more preferably 500000 or less. The molecular weight distribution Mw/Mn determined from the number average molecular weight Mn and the weight average molecular weight Mw of the cellulose ester affects the biodegradation rate. From the viewpoint of achieving a desired biodegradation rate, the molecular weight distribution Mw/Mn is preferably 1.3 or greater, more preferably 1.5 or greater, and even more preferably 2.0 or greater, and is preferably 5.0 or less, more preferably 4.0 or less, and even more preferably 3.0 or less.

The number average molecular weight Mn and the weight average molecular weight Mw of the cellulose ester can be determined by a known method. Specifically, the number average molecular weight Mn and the weight average molecular weight Mw of the cellulose ester can be determined by implementing size exclusion chromatography (GPC) measurements using the following device under the following conditions.
Device: GPC device available from Shimadzu Corporation
Solvent: acetone
Column: two α-M (Tosoh Corporation), and a guard column (TSK gel guard column HXL-H available from Tosoh Corporation)
Flow rate: 0.8 mL/min
Temperature: 25°C
Sample concentration: 0.25% (wt/vol)
Injection volume: 100 µL
Detection: RID-20A (differential refractive index detector)
Standard substance for calibration curve: PMMA(molecular weight: from 2000 to 700000)

### Aliphatic Polyester

The aliphatic polyester contained in the agricultural composition according to an embodiment of the present disclosure is not particularly limited, and any aliphatic polyester exhibiting biodegradability can be suitably used. Moreover, from the viewpoint of the polymer structure, the aliphatic polyester may be a polyhydroxyalkanoate having, as a repeating unit, a constituent unit produced by polycondensation of a hydroxyalkanoic acid, or may be a polymer having, as a repeating unit, a constituent unit produced by dehydration condensation of a dicarboxylic acid and a diol.

Examples of the polyhydroxyalkanoate include polyglycolic acid, polylactic acid, poly(β-hydroxybutyric acid), poly(β-hydroxyvaleric acid), poly(lactic acid-co-glycolic acid), poly(β-hydroxybutyric acid-co-β-hydroxyvaleric acid), poly(β-propiolactone), and poly(ε-caprolactone). Examples of the polymer having, as a repeating unit, a constituent unit produced by dehydration condensation of a dicarboxylic acid and a diol include polyethylene succinate, polybutylene succinate, and poly(butylene succinate-co-butylene adipate). Two or more types of aliphatic polyesters may be used in combination. The aliphatic polyester may be used in combination with the aforementioned cellulose ester. Another polyester may be blended as long as the effects of the present disclosure are not impaired.

From the viewpoints of procurement ease and excellent granular formability, a preferable aliphatic polyester is poly(ε-caprolactone) (hereinafter, may be simply referred to as "polycaprolactone"). When two or more aliphatic polyesters are used, preferably two or more including polycaprolactone are used.

### Weight Average Molecular Weight and Molecular Weight Distribution of Aliphatic Polyester

From the viewpoint of excellent granular formability, the weight average molecular weight Mw of the aliphatic polyester is preferably 5000 or greater, more preferably 10000 or greater, and still more preferably 30000 or greater. From the viewpoint of excellent biodegradability, the weight average molecular weight Mw of the aliphatic polyester is preferably 3000000 or less, and more preferably 2000000 or less. The weight average molecular weight Mw of the aliphatic polyester may be from 5000 to 3000000, from 5000 to 2000000, from 10000 to 3000000, from 10000 to 2000000, from 30000 to 3000000, or from 30000 to 2000000. The molecular weight distribution Mw/Mn determined from the number average molecular weight Mn and the weight average molecular weight Mw affects the biodegradation rate of the aliphatic polyester. From the viewpoint of achieving a desired biodegradation rate, the molecular weight distribution Mw/Mn is preferably 1.3 or greater, more preferably 1.5 or greater, and even more preferably 2.0 or greater, and is preferably 5.0 or less, more preferably 4.0 or less, and even more preferably 3.0 or less. The molecular weight distribution Mw/Mn of the aliphatic polyester may be from 1.3 to 5.0, from 1.3 to 4.0, from 1.3 to 3.0, from 1.5 to 5.0, from 1.5 to 4.0, from 1.5 to 3.0, from 2.0 to 5.0, from 2.0 to 4.0, or from 2.0 to 3.0. The weight average molecular weight Mw and the molecular weight distribution Mw/Mn of the aliphatic polyester are measured by the method described above for the cellulose ester.

### Inorganic Additive

An inorganic additive can control the hydrolysis rate of the biodegradable polymer. In particular, when the biodegradable polymer is cellulose acetate, the inorganic additive controls the hydrolysis rate of the cellulose acetate, and thereby the storage stability can be improved. The inorganic additive also suppresses a decrease in pH in the soil due to the release of acetic acid. Therefore, in the agricultural composition according to an embodiment of the present disclosure and containing an inorganic additive, a buffering action that alleviates adverse effects on plants is performed. The type of the inorganic additive is not particularly limited as long as the desired granular material is provided. For example, from the viewpoints or procurement ease and a high level of safety, one or two or more types selected from alkali metal salts and alkaline earth metal salts are preferable, and one or two or more types selected from alkaline earth metal salts are more preferable.

Examples of the alkali metal salt include potassium salts and sodium salts. Examples of the alkaline earth metal salts include magnesium salts and calcium salts. In the present disclosure, the inorganic additive may be a carbonate, a phosphate, or an acetate of potassium, sodium, magnesium, or calcium. From the viewpoint of improving granular formability and storage stability, a phosphate or carbonate of potassium, or a mixture thereof is preferable. The inorganic additive may be potassium carbonate, potassium bicarbonate, potassium dihydrogen phosphate, dipotassium hydrogen phosphate, tripotassium phosphate, or a mixture thereof.

### Composition

In the present disclosure, the content of acetic acid contained in the agricultural composition is not particularly limited. For example, the content of acetic acid may be appropriately selected according to the application. From the viewpoint of releasing a high amount of acetic acid at the initial stage of use, the content of acetic acid may be greater than 0 wt.%, preferably 0.1 wt.% or greater, more preferably 1.0 wt.% or greater, and still more preferably 5.0 wt.% or greater. From the viewpoint of improving granular formability and storage stability, the content of acetic acid is preferably less than 60 wt.%, more preferably 55 wt.% or less, and even more preferably 50 wt.% or less. The content of acetic acid in the agricultural composition may be greater than 0 wt.% and less than 60 wt.%, greater than 0 wt.% and 55 wt.% or less, greater than 0 wt.% and 50 wt.% or less, 0.1 wt.% or greater and less than 60 wt.%, from 0.1 wt.% to 55 wt.%, from 0.1 wt.% to 50 wt.%, 1.0 wt.% or greater and less than 60 wt.%, from 1.0 wt.% to 55 wt.%, from 1.0 wt.% to 50 wt.%, 5.0 wt.% or greater and less than 60 wt.%, from 5.0 wt.% to 55 wt.%, or from 5.0 wt.% to 50 wt.%.

The amount of the inorganic additive in the agricultural composition may be appropriately adjusted according to details such as the content of acetic acid and the type of the biodegradable polymer. From the viewpoint of improving granular formability and storage stability, the amount of the inorganic additive is preferably 1 part by weight or greater, more preferably 5 parts by weight or greater, and still more preferably 10 parts by weight or greater, per 100 parts by weight of the acetic acid. From the viewpoint of the application effect, the amount of the inorganic additive is preferably 200 parts by weight or less, more preferably 180 parts by weight or less, and even more preferably 150 parts by weight or less, per 100 parts by weight of the acetic acid. The amount of the inorganic additive in the agricultural composition may be, per 100 parts by weight of the acetic acid, from 1 to 200 parts by weight, from 1 to 180 parts by weight, from 1 to 150 parts by weight, from 5 to 200 parts by weight, from 5 to 180 parts by weight, from 5 to 150 parts by weight, from 10 to 200 parts by weight, from 10 to 180 parts by weight, or from 10 to 150 parts by weight.

From the viewpoint of easily producing the desired granular material, the content of the biodegradable polymer in the agricultural composition is preferably 30 wt.% or greater, more preferably 35 wt.% or greater, and still more preferably 40 wt.% or greater. From the viewpoint of maintaining a desired amount of acetic acid, the content of the biodegradable polymer is preferably 90 wt.% or less. The content of the biodegradable polymer in the agricultural composition may be from 30 to 90 wt.%, from 35 to 90 wt.%, or from 40 to 90 wt.%.

### Optional Components

The agricultural composition may further contain water as long as the effects of the present disclosure can be achieved. The addition of water promotes hydrolysis of the biodegradable polymer. The water concentration in the agricultural composition is preferably 1 wt.% or greater, and more preferably 2 wt.% or greater. From the viewpoint of storage stability, the water concentration in the agricultural composition is preferably 5 wt.% or less, and more preferably 4 wt.% or less. The water concentration in the agricultural composition may be from 1 to 5 wt.%, from 1 to 4 wt.%, from 2 to 5 wt.%, or from 2 to 4 wt.%. The agricultural composition may further contain, as optional components, known additives such as inorganic fillers, colorants, ultraviolet absorbers, light stabilizers, antioxidants, heat stabilizers, and hydrolysis inhibitors.

### Second Embodiment

An agricultural composition according to a second embodiment includes a granular material and a coating film covering the surface of the granular material. The granular material contains acetic acid, a biodegradable polymer miscible with acetic acid, and an inorganic additive. The acetic acid, the biodegradable polymer miscible with acetic acid, and the inorganic additive described in the first embodiment above can be suitably used.

In the second embodiment, since the granular material has a coating film, an initial elution amount of the acetic acid from the granular material and the elution rate thereof are suppressed. According to the present embodiment, acetic acid can be stably released for a long period of time through one application. In addition, in the present embodiment, a desired acetic acid elution rate can be achieved by selecting the material, thickness, coverage percentage, and the like of the coating film in accordance with the type of plant to be grown, the growth environment, and weather conditions such as rainfall. Further, an effect of reducing the impact on the environment can be achieved by forming the coating film using a biodegradable material.

### Thickness and Coverage Percentage of Coating Film

In the second embodiment, the thickness and coverage percentage of the coating film are not particularly limited, and can be appropriately selected to achieve the desired acetic acid elution rate. From the viewpoint of suppressing the initial elution amount of acetic acid, the coverage percentage of the coating film is preferably 5.0 wt.% or greater, and more preferably 5.5 wt.% or greater. From the viewpoint of not excessively suppressing the acetic acid elution rate, the coverage percentage of the coating film is preferably 10.0 wt.% or less. The coverage percentage of the coating film may be from 5.0 to 10.0 wt.%, or may be from 5.5 to 10.0 wt.%. In the present disclosure, the coverage percentage can be determined from the change in weight before and after the formation of the coating film. In addition, from the viewpoint of suppressing the initial elution amount of acetic acid, the thickness of the coating film is preferably 50 µm or greater, and more preferably 60 µm or greater. From the viewpoint of improving biodegradability, the thickness of the coating film is preferably 200 µm or less. The thickness of the coating may be from 50 to 200 µm, or from 60 to 200 µm.

### Coating Film Material

The material constituting the coating film is not particularly limited as long as the elution of acetic acid from the granular material can be controlled. For example, the material of the coating film may be a water-insoluble polymer or a mixture of a water-insoluble polymer and a water-soluble polymer. In the coating film composed of a mixture of a water-insoluble polymer and a water-soluble polymer, the water-soluble polymer is dispersed in a matrix of the water-insoluble polymer. When the agricultural composition provided with the coating film is applied to soil or the like, the water-soluble polymer is first desorbed from the coating film by contact with water in the environment. Through the desorption of the water-soluble polymer, fine pores can be formed in the coating film composed of the water-insoluble polymer. The acetic acid in the granular material is eluted through the pores. In addition, through the desorption of the water-soluble polymer, the contact area between the remaining coating film and water increases. Thereby, a hydrolysis reaction of the coating film composed of the water-insoluble polymer may be promoted. From the viewpoint of improving the initial elution amount of acetic acid and the biodegradability, the material of the coating film is preferably a mixture of a water-insoluble polymer and a water-soluble polymer.

### Water-Insoluble Polymer

The type of the water-insoluble polymer is not limited as long as the effect of the present disclosure is not inhibited. However, from the viewpoint of reducing the environmental impact, a water-insoluble polymer having biodegradability is preferable. Examples of such water-insoluble polymers include cellulose esters, aliphatic polyesters, and mixtures thereof. A cellulose ester and an aliphatic polyester described above in the first embodiment can be appropriately selected and used. Preferably, the water-insoluble polymer is one or two or more types selected from the group consisting of polycaprolactone, cellulose acetate, cellulose acetate propionate, and cellulose acetate butyrate. More preferably, the water-insoluble polymer is polycaprolactone.

### Weight Average Molecular Weight Mw of Water-Insoluble Polymer

From the viewpoint of ease of coating film formation, the weight average molecular weight Mw of the water-insoluble polymer is preferably 1000 or greater, more preferably 5000 or greater, and even more preferably 10000 or greater. From the viewpoint of not excessively suppressing elution of the acetic acid, the weight average molecular weight Mw of the water-insoluble polymer is preferably 100000 or less. The weight average molecular weight Mw of the water-insoluble polymer may be from 1000 to 100000, from 5000 to 100000, or from 10000 to 100000. The weight average molecular weight Mw of the water-insoluble polymer is measured by the method described above for the cellulose ester of the first embodiment.

### Water-Soluble Polymer

The type of the water-soluble polymer is not particularly limited as long as the effect of the present disclosure is not inhibited, and the type thereof is appropriately selected in consideration of miscibility with the water-insoluble polymer. Examples of the water-soluble polymer used in the coating film include polyether polyols such as polyethylene glycol, and polysaccharides such as carboxymethyl cellulose (CMC), hydroxyethyl cellulose (HEC), and starch. Two or more types of water-soluble polymers can be used in combination. The water-soluble polymer is preferably a polyether polyol.

### Weight Average Molecular Weight Mw of Water-Soluble Polymer

From the viewpoint of ease of coating film formation, the weight average molecular weight Mw of the water-soluble polymer is preferably 500 or greater, more preferably 800 or greater, and even more preferably 1000 or greater. From the viewpoint of ease of mixing with the water-insoluble polymer, the weight-average molecular weight Mw of the water-soluble polymer is preferably 20000 or less. The weight average molecular weight Mw of the water-soluble polymer may be from 500 to 20000, from 800 to 20000, or from 1000 to 20000. The weight average molecular weight Mw of the water-soluble polymer is measured by the method described above for the cellulose ester of the first embodiment.

### Coating Film Composition

When the material of the coating film is a mixture of a water-insoluble polymer and a water-soluble polymer, the initial elution amount and elution rate of acetic acid from the granular material can be controlled by the amount of the water-soluble polymer in the coating film. For example, the amount of the water-soluble polymer relative to 100 parts by weight of the water-insoluble polymer may be 1 part by weight or greater, 5 parts by weight or greater, or 10 parts by weight or greater, and may be less than 100 parts by weight, less than 90 parts by weight, or less than 80 parts by weight. The amount of the water-soluble polymer relative to 100 parts by weight of the water-insoluble polymer may be 1 part by weight or greater and less than 100 parts by weight, 1 part by weight or greater and less than 90 parts by weight, 1 part by weight or greater and less than 80 parts by weight, 5 parts by weight or greater and less than 100 parts by weight, 5 parts by weight or greater and less than 90 parts by weight, 5 parts by weight or greater and less than 80 parts by weight, 10 parts by weight or greater and less than 100 parts by weight, 10 parts by weight or greater and less than 90 parts by weight, or 10 parts by weight or greater and less than 80 parts by weight.

### Method for Producing Agricultural Composition

The method for producing the agricultural composition according to an embodiment of the present disclosure is not particularly limited, and a granular material containing acetic acid, a biodegradable polymer miscible with acetic acid, and an inorganic additive can be produced by a known method such as a tumbling granulation method, a fluidized bed granulation method, a tumbling fluidized bed granulation method, or a spray drying granulation method. For example, the agricultural composition according to an embodiment of the present disclosure may be produced by inserting the biodegradable polymer and the inorganic additive described above into a known tumbling granulator, spraying acetic acid or an acetic acid solution while tumbling at a predetermined temperature, and granulating until a desired grain size is provided.

The amount of acetic acid added in granulation may be greater than 0 parts by weight, preferably 1.0 part by weight or greater, more preferably 5.0 parts by weight or greater, and even more preferably 10.0 parts by weight or greater, per 100 parts by weight of the biodegradable polymer. From the viewpoint of granular formability, the amount of acetic acid is preferably 150 parts by weight or less, and more preferably 120 parts by weight or less, per 100 parts by weight of the biodegradable polymer. The amount of the acetic acid that is inserted in granulation per 100 parts by weight of the biodegradable polymer may be greater than 0 parts by weight and 150 parts by weight or less, greater than 0 parts by weight and 120 parts by weight or less, from 1.0 to 150 parts by weight, from 1.0 to 120 parts by weight, from 5.0 to 150 parts by weight, from 5.0 to 120 parts by weight, from 10.0 to 150 parts by weight, or from 10.0 to 120 parts by weight.

The amount of the inorganic additive that is inserted at the time of granulation per 100 parts by weight of the acetic acid is preferably 1 part by weight or greater, preferably 5 parts by weight or greater, and preferably 10 parts by weight or greater, and also preferably 200 parts by weight or less, more preferably 180 parts by weight or less, and even more preferably 150 parts by weight or less. The amount of the inorganic additive that is added at the time of granulation per 100 parts by weight of the acetic acid may be from 1 to 200 parts by weight, from 1 to 180 parts by weight, from 1 to 150 parts by weight, from 5 to 200 parts by weight, from 5 to 180 parts by weight, from 5 to 150 parts by weight, from 10 to 200 parts by weight, from 10 to 180 parts by weight, or from 10 to 150 parts by weight.

If necessary, a small amount of water may be added as a granulation aid in granulation within a scope in which the effect of the present disclosure is not impaired. Also, after granulation, the water content may be adjusted by drying, and the grain size may be adjusted through sieving or the like.

The method for forming a coating film on the surface of the granular material produced by the above-described method is not particularly limited. For example, a granular material having a coating film on the surface can be produced by spraying or dropping a solution containing a coating film material onto a granular material that has been brought into a fluidized state by a known method, and then mixing the fluidized granular material with the solution.

An example of a production device for forming a coating film on the granular material according to an embodiment of the present disclosure is illustrated in FIG. 1. This production device is provided with a jetting tower 1 provided with a solids insertion port 2 and an exhaust gas discharge port 3. In FIG. 1, reference numerals T1, T2, and T3 denote thermometers. A granular material 20 inserted from the solids insertion port 2 forms a jet stream through hot air supplied from a blower 10 through an orifice flow meter 9 and a heat exchanger 8. A coating solution is sprayed from a liquid nozzle 4 into the jet stream to thereby form a coating film on the surface of the granular material. In this production device, the coating solution is adjusted in a liquid tank 11 having a stirrer 12 and a jacket 13 and is supplied to the liquid nozzle 4 via a pump 5. The produced agricultural composition is collected from an extraction port 7 after the operation of the device is completed. A specific method for forming the coating film using this production device will be described later in the Examples.

### Applications

The agricultural composition according to an embodiment of the present disclosure can be used as an agricultural material for various agricultural crops or horticultural crops having acetic acid sensitivity. The agricultural composition may be applied to a plant or a plant growth environment together with, for example, a fertilizer.

### Examples

The effects of the present disclosure will be clarified by the examples below, but the present disclosure should not be construed as being limited based on the description of the examples.

### Test 1

### Example 1

A mixture was produced by mixing 40 parts by weight of cellulose acetate CA1 (available from Daicel Corporation, degree of acetyl substitution of 2.2, weight average molecular weight of 200000) and 40 parts by weight of dipotassium hydrogen phosphate (available from Fujifilm Wako Pure Chemical Industries, Ltd.), and the resulting mixture was inserted into a dish-type tumbling granulator. Subsequently, 20 parts by weight of acetic acid (available from Fujifilm Wako Pure Chemical Industries, Ltd.) was sprayed into the mixture while tumbling at a rotation speed of 25 rpm, and granulation was carried out until the average grain size became about 2.5 mm, and thereby an agricultural composition of Example 1 was produced. The state during granulation was visually observed, and the granular formability was evaluated **on the basis** of the following criteria. The evaluation results are presented in Table 1 below.

### Granular Formability Evaluation Criteria

○: Uniform granulated grains having an average grain size of 2 mm or greater are produced, and the shape can be maintained.
△: Granulated grains are produced, but the grain size and shape are not uniform, and the shape cannot be maintained.
×: Formation of granulated grains is hardly observed.

Note that the average grain size of the granulated grains is a volume-based median diameter and was measured by a sieving method using a JIS standard sieve.

### Examples 2 to 6 and Comparative Examples 1 and 2

Granulation was carried out in the same manner as in Example 1 with the exception that the type of compound inserted into the dish-type tumbling granulator and the composition were as described in Table 1 below. The evaluation results of the granular formability of Examples 2-6 and Comparative Examples 1 and 2 are presented in Table 1 below.

**[Table 1]**

| | Composition | | | | | Granular Formability |
|---|---|---|---|---|---|---|
| | Cellulose acetate | | | Dipotassium hydrogen phosphate | Acetic acid | |
| | Type | Degree of substitution | [wt.%] | [wt.%] | [wt.%] | |
| Example 1 | CA1 | 2.2 | 40 | 40 | 20 | ○ |
| Example 2 | CA2 | 2.4 | 40 | 40 | 20 | ○ |
| Example 3 | CA3 | 2.8 | 40 | 40 | 20 | ○ |
| Example 4 | CA2 | 2.4 | 60 | 20 | 20 | ○ |
| Example 5 | CA2 | 2.4 | 30 | 30 | 40 | ○ |
| Example 6 | CA2 | 2.4 | 50 | 0 | 50 | ○ |
| Comparative Example 1 | CA2 | 2.4 | 90 | 0 | 10 | Δ |
| Comparative Example 2 | - | - | 0 | 90 | 10 | × |

The details of the cellulose acetates presented in Table 1 are as follows.
CA1: cellulose acetate available from Daicel Corporation (degree of acetyl substitution of 2.2, weight average molecular weight of 200000)
CA2: cellulose acetate available from Daicel Corporation (degree of acetyl substitution of 2.4, weight average molecular weight of 240000)
CA3: cellulose acetate available from Daicel Corporation (degree of acetyl substitution of 2.8, weight average molecular weight of 270000)

### Test 2

In Test 2, various coating films were formed on the surfaces of the granular materials produced in the same manner as in Example 1 using a device having the basic configuration shown in FIG. 1, and the characteristic of elution of acetic acid from the agricultural compositions having the coating films was evaluated.

### Example 7

First, acetone (available from Kanto Chemical Co., Inc.) was inserted into a liquid tank 11 equipped with a stirrer 12 and a jacket 13, and then 90 parts by weight of polycaprolactone PCL1 (available from Daicel Corporation, weight average molecular weight of 10000) and 10 parts by weight of polyethylene glycol PEG1 (available from Fujifilm Wako Pure Chemical Industries, Ltd., weight average molecular weight of 10000) were inserted at amounts to obtain a solid content concentration of 1.5 wt.%. Steam was passed through the jacket 13 to adjust the liquid temperature to 45°C, after which the contents were stirred to thereby prepare a coating liquid.

Next, the blower 10 was started, and air (temperature of 50°C, air flow rate of 4 m³/min) for forming a jet stream was blown sequentially through the orifice flow meter 9 and the heat exchanger 8 and into the jetting tower 1 (tower diameter of 200 mm, height of 180 mm, air jetting diameter of 42 mm). In the heat exchanger 8, the air temperature was adjusted through steam. Subsequently, 5 kg of the granular material 20 was inserted through the solids insertion port 2, and a jet stream was formed. After the thermometers T1, T2 and T3, which were installed in the jetting tower 1 at the illustrated positions, confirmed that the temperature of the granular material in the jet stream had reached 50°C, the pump 5 was started, and the coating liquid was sprayed toward the jet stream through the liquid nozzle 4 (opening of 0.8 mm, full control type) at a rate of 0.5 kg/min. In FIG. 1, reference numeral 6 denotes a valve. After a predetermined amount of time had passed, the pump 5 was stopped, after which the blower 10 was stopped, and an agricultural composition of Example 7 having a coating film with a film pressure of 52 µm was produced by extraction through the extraction port 7. The change in weight before and after application of the coating was measured, and the coverage percentage was confirmed to be 5.5 wt.%.

### Examples 8 to 14

Agricultural compositions of Examples 8 to 14 were produced in the same manner as in Example 7 with the exception that the components and compositions of the coating liquids were as shown in Table 2 below. The spraying time of the coating liquid was adjusted in a range of from 30 minutes to 1 hour, and thereby a coverage percentage of 5.5 wt.% was provided.

### Acetic Acid Elution Test

0.5 g of the agricultural composition was immersed in 100 mL of distilled water having a temperature of 30°C, and the change over time in the concentration of acetic acid in the distilled water was measured by ion chromatography. Specifically, samples of Examples 7 to 14 were each immersed in the distilled water, after which 0.1 g of water was sampled every hour and appropriately diluted, after which the acetic acid concentration was measured by the following method to determine an acetic acid elution amount A.
Instrument used: DIONEX Integrion RFIC (available from Thermo Fisher Scientific Inc.)
Column: ICE-AS 1 (available from Thermo Fisher Scientific Inc.)
Eluent: 1 mM octanesulfonic acid
Regeneration liquid: 5 mM tetramethylammonium hydroxide
Flow rate: 0.8 mL/min
Suppressor: ACRS-ICE500 (available from Thermo Fisher Scientific Inc.)
Detector: electrical conduction detector
Column temperature: 30°C
Injection volume: 200 µL

Using the granular material of Example 1 before coating, an elution test was carried out under the same conditions, and an acetic acid elution amount B was determined every hour. The immersion time at which the acetic acid elution rate (%) calculated by the following equation became 30% is shown in Table 2 below. Acetic acid elution rate (%) = (acetic acid elution amount B)/(acetic acid elution amount A) × 100

**[Table 2-1]**

| | Coating Film Composition | | | | | |
|---|---|---|---|---|---|---|
| | Cellulose acetate | | | Polycaprolactone | | |
| | Type | Degree of substitution | [wt.%] | Type | Mw | [wt.%] |
| Example 7 | - | 0 | 0 | PCL1 | 10000 | 90 |
| Example 8 | - | 0 | 0 | PCL2 | 50000 | 70 |
| Example 9 | - | 0 | 0 | PCL2 | 50000 | 80 |
| Example 10 | - | 0 | 0 | PCL3 | 4000 | 90 |
| Example 11 | CA2 | 2.4 | 80 | - | 0 | 0 |
| Example 12 | CA3 | 2.8 | 80 | - | 0 | 0 |
| Example 13 | - | 0 | 0 | PCL4 | 800 | 90 |
| Example 14 | - | 0 | 0 | PCL5 | 1000 | 90 |

**[Table 2-2]**

| | Coating Film Composition | | | Film Thickness | Elution Time |
|---|---|---|---|---|---|
| | Polyethylene glycol | | | | |
| | Type | Mw | [wt.%] | µm | hr |
| Example 7 | PEG1 | 10000 | 10 | 52 | 12 |
| Example 8 | PEG1 | 10000 | 30 | 93 | 10 |
| Example 9 | PEG2 | 6000 | 20 | 95 | 7 |
| Example 10 | PEG3 | 1000 | 10 | 91 | 8 |
| Example 11 | PEG1 | 10000 | 20 | 100 | 2 |
| Example 12 | PEG1 | 10000 | 20 | 102 | 3 |
| Example 13 | PEG3 | 1000 | 10 | 95 | 4 |
| Example 14 | PEG4 | 100 | 10 | 93 | 2 |

The details of the cellulose acetates presented in Table 2 are as follows.
CA2: cellulose acetate available from Daicel Corporation (degree of acetyl substitution of 2.4, weight average molecular weight of 240000)
CA3: cellulose acetate available from Daicel Corporation (degree of acetyl substitution of 2.8, weight average molecular weight of 270000)
PCL1: polycaprolactone (weight average molecular weight of 10000) available from Daicel Corporation
PCL2: polycaprolactone (weight average molecular weight of 50000) available from Daicel Corporation
PCL3: polycaprolactone (weight average molecular weight of 4000) available from Daicel Corporation
PCL4: polycaprolactone (weight average molecular weight of 800) available from Daicel Corporation
PCL5: polycaprolactone (weight average molecular weight of 1000) available from Daicel Corporation
PEG1: polyethylene glycol (weight average molecular weight of 10000) available from Fujifilm Wako Pure Chemical Industries, Ltd.
PEG2: polyethylene glycol (weight average molecular weight of 6000) available from Fujifilm Wako Pure Chemical Industries, Ltd.
PEG3: polyethylene glycol (weight average molecular weight of 1000) available from Fujifilm Wako Pure Chemical Industries, Ltd.
PEG4: polyethylene glycol (weight average molecular weight of 100) available from Fujifilm Wako Pure Chemical Industries, Ltd.

### Conclusion

As shown in Table 1, it was confirmed that the compositions of the Examples exhibited better granular formability and were agricultural compositions of solid granular forms that could more stably support acetic acid than those of Comparative Examples. Moreover, as shown in Table 2, it was confirmed that the elution rate of acetic acid can be controlled by the agricultural composition having the coating film. From these evaluation results, the superiority of the present disclosure is clear.

### Disclosed Aspects

Each of the following aspects discloses a preferred embodiment.

### Aspect 1

An agricultural composition that is:
a granular material containing acetic acid, a biodegradable polymer miscible with acetic acid, and an inorganic additive.

### Aspect 2

The agricultural composition according to aspect 1, including a coating film covering the surface of the granular material.

### Aspect 3

The agricultural composition according to aspect 1 or 2, wherein a solubility of the biodegradable polymer in acetic acid is from 1 wt.% to 95 wt.% at 50°C.

### Aspect 4

The agricultural composition according to any of aspects 1 to 3, wherein the biodegradable polymer is a cellulose ester and/or an aliphatic polyester.

### Aspect 5

The agricultural composition according to aspect 4, wherein the cellulose ester is one or two or more types selected from the group consisting of cellulose acetate, cellulose acetate propionate, and cellulose acetate butyrate.

### Aspect 6

The agricultural composition according to aspect 4 or 5, wherein an average degree of substitution of the cellulose ester is from 2.00 to 2.60.

### Aspect 7

The agricultural composition according to any of aspects 4 to 6, wherein the aliphatic polyester is a polyhydroxyalkanoate or a polymer of an aliphatic dicarboxylic acid and an aliphatic diol.

### Aspect 8

The agricultural composition according to any of aspects 4 to 7, wherein the aliphatic polyester is polycaprolactone.

### Aspect 9

The agricultural composition according to any of aspects 1 to 8, wherein the inorganic additive is one or two or more types selected from alkali metal salts and alkaline earth metal salts.

### Aspect 10

The agricultural composition according to any of aspects 1 to 9, wherein the inorganic additive is a phosphate or carbonate of potassium, or a mixture thereof.

### Aspect 11

The agricultural composition according to any of aspects 1 to 10, wherein a content of the acetic acid is greater than 0 and less than 60 wt.%.

### Aspect 12

The agricultural composition according to any of aspects 1 to 11, wherein an amount of the inorganic additive is from 1 part by weight to 200 parts by weight per 100 parts by weight of the acetic acid.

### Aspect 13

The agricultural composition according to any of aspects 2 to 12, wherein a material of the coating film is a mixture of a water-insoluble polymer and a water-soluble polymer.

### Aspect 14

The agricultural composition according to aspect 13, wherein
the water-insoluble polymer is one or two or more types selected from the group consisting of polycaprolactone, cellulose acetate, cellulose acetate propionate, and cellulose acetate butyrate, and
the water-soluble polymer is a polyether polyol.

### Aspect 15

The agricultural composition according to aspect 13 or 14, wherein
the water-insoluble polymer has a weight average molecular weight of from 1000 to 100000, and
the water-soluble polymer has a weight average molecular weight of from 500 to 20000.

### Reference Signs List

1: Jetting tower
2: Solids insertion port
3: Exhaust gas discharge port
4: Liquid nozzle
5: Pump
6: Valve
7: Extraction port
8: Heat exchanger
9: Orifice flow meter
10: Blower
11: Liquid tank
12: Stirrer
13: Jacket
20: Granular material
T1, T2, T3: Thermometer

## Claims

1. An agricultural composition that is:
a granular material comprising acetic acid, a biodegradable polymer miscible with acetic acid, and an inorganic additive.

2. The agricultural composition according to claim 1, comprising a coating film covering a surface of the granular material.

3. The agricultural composition according to claim 1, wherein a solubility of the biodegradable polymer in acetic acid is from 1 wt.% to 95 wt.% at 50°C.

4. The agricultural composition according to claim 1, wherein the biodegradable polymer is a cellulose ester and/or an aliphatic polyester.

5. The agricultural composition according to claim 4, wherein the cellulose ester is one or two or more types selected from the group consisting of cellulose acetate, cellulose acetate propionate, and cellulose acetate butyrate.

6. The agricultural composition according to claim 4, wherein an average degree of substitution of the cellulose ester is from 2.00 to 2.60.

7. The agricultural composition according to claim 4, wherein the aliphatic polyester is a polyhydroxyalkanoate or a polymer of an aliphatic dicarboxylic acid and an aliphatic diol.

8. The agricultural composition according to claim 4, wherein the aliphatic polyester is polycaprolactone.

9. The agricultural composition according to claim 1, wherein the inorganic additive is one or two or more types selected from alkali metal salts and alkaline earth metal salts.

10. The agricultural composition according to claim 1, wherein the inorganic additive is a phosphate or carbonate of potassium, or a mixture thereof.

11. The agricultural composition according to claim 1, wherein a content of the acetic acid is greater than 0 and less than 60 wt.%.

12. The agricultural composition according to claim 1, wherein an amount of the inorganic additive is from 1 part by weight to 200 parts by weight per 100 parts by weight of the acetic acid.

13. The agricultural composition according to claim 2, wherein a material of the coating film is a mixture of a water-insoluble polymer and a water-soluble polymer.

14. The agricultural composition according to claim 13, wherein
the water-insoluble polymer is one or two or more types selected from the group consisting of polycaprolactone, cellulose acetate, cellulose acetate propionate, and cellulose acetate butyrate, and
the water-soluble polymer is a polyether polyol.

15. The agricultural composition according to claim 13, wherein
the water-insoluble polymer has a weight average molecular weight of from 1000 to 100000, and
the water-soluble polymer has a weight average molecular weight of from 500 to 20000.
